Europäisches Patentamt

European Patent Office

Office européen des brevets

(11) Publication number: **0 201 636**
**B1**

(12) **EUROPEAN PATENT SPECIFICATION**

(45) Date of publication of patent specification: **06.09.89**

(51) Int. Cl.⁴: **G 03 C 5/16**

(21) Application number: **85302966.8**

(22) Date of filing: **26.04.85**

(54) Noise erasing apparatus for stimulable phosphor sheet.

(43) Date of publication of application:
**20.11.86 Bulletin 86/47**

(45) Publication of the grant of the patent:
**06.09.89 Bulletin 89/36**

(84) Designated Contracting States:
**DE FR GB NL**

(56) References cited:
**EP-A-0 056 638**
**DE-A-3 045 631**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Fujiwara, Shigemi c/o Patent Division**
**Toshiba Corporation Principal Office**
**1-1 Shibaura 1-chome Minato-ku Tokyo (JP)**
Inventor: **Koyama, Katsuhide c/o Patent**
**Division**
**Toshiba Corporation Principal Office**
**1-1 Shibaura 1-chome Minato-ku Tokyo (JP)**
Inventor: **Kageyama, Hiroshi c/o Patent Division**
**Toshiba Corporation Principal Office**
**1-1 Shibaura 1-chome Minato-ku Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to noise erasing apparatus for use with stimulable phosphor sheets.

As is well known in the art of radiograph, a photographic method, in which an X-ray film having an emulsion layer comprising a silver salt is used in combination with an intensifying screen, has generally been employed to obtain a radiation image. Because of the shortage and resultant high cost of silver resources, a method of obtaining a radiation image without using a silver salt has been desired.

U.S. Patent No. 3859527, entitled Apparatus and Method for Producing Images Corresponding to Patterns of High Energy Radiation, disclosed and claims a method of radiation image recording which employs a radiation image storage panel comprising a stimulable phosphor which emits light when stimulated by electromagnetic waves selected from visible light and infra-red after exposure to radiation, such as X-rays, α-rays, β-rays, high energy neutrons, electron beams, vacuum ultra-violet rays, ultra-violet rays, and other similar electromagnetic waves or corpuscular beams.

U.S. Patent No. 4236078, entitled Method and Apparatus for Recording and Reproducing a Radiation Image, describes a method in which the final visible image may be reproduced in the form of a hard copy or may be displayed on a cathode ray tube. The stimulable phosphor sheet used in this method may take various forms, such as a panel, a drum, or the like, which are herein generally referred to as imaging plates (IP). For economical reasons, it is desirable that the IP be used repeatedly in many separate radiographic operations, say, 1000 operations.

Two problems have been posed in re-using the stimulable phosphor sheet in the course of radiation image recording and reproducing systems and processes as described above.

One problem encountered in repeatedly reusing the stimulable phosphor sheet has been that part of the previously stored radiation image remains in the stimulable phosphor sheet after use and it causes noise to occur in the visible image reproduced from the stimulable phosphor sheet when it is re-used. Theoretically, the radiation energy of the radiation image stored in the stimulable phosphor sheet should disappear when the sheet is scanned with a simulating ray of a sufficient intensity to sequentially release the radiation energy stored as light emission. However, in practice, the stored radiation energy cannot be completely eliminated simply by scanning by the stimulating ray. Therefore, a first erasing, in which the radiation image previously stored in the stimulable phosphor is erased at high illumination for a long period of time by use of a large-scale device, can be carried out before the stimulable phosphor sheet is used in radiography.

Another problem has been that a stimulable phosphor contains a trace of radioactive isotopes, such as $^{226}$Ra and $^{40}$K, which emit radiations and cause the stimulable phosphor sheet to store the emitted radiation energy, even when the sheet is not being used in radiography. These traces of radioactive isotopes also constitute a cause of the noise developing in the reproduced visible radiation image. Further, a stimulable phosphor sheet is also affected by environmental radiations, such as cosmic rays and X-rays emitted from other X-ray sources and it stores the energy thereof. These types of radiation energy also cause noise to appear in the visible radiation image reproduced therefrom. In order to erase this obstructive radiation energy, a second erasing by a small scale erasing device can be conducted over a short period of time immediately before the phosphor sheet is re-used.

A device and method of this kind is known from U.S. Patent No. 4438333, entitled Noise Erasing Apparatus for Stimulable Phosphor Sheet, and U.S. Patent No. 4439682, entitled Noise Erasing Method in a Radiation Image Recording and Reproducing Method.

An optimised second erasing device requires:

a. an appropriate illumination of light from a light source to complete the erasing operation quickly;

b. it is necessary to prevent the second erasing device from emitting ultra-violet rays which constitute a cause of the noise developed during the second erasing operation; and

c. it is necessary to prevent the exposure of light from increasing the temperature to protect the supporting plate for guiding and supporting the stimulable phosphor sheet.

The illuminant may be, for example, a tungsten-filament, fluorescent, sodium, xenon, or iodine lamp.

Regarding the above illuminant, it is well known that the illumination depends on the luminance of the lamp used in such a device, and the cause of noise, as described previously, and temperature radiation increases with a decrease in the color temperature of the illuminant. Further, the luminance and the color temperature of the lamp are determined in accordance with the load power to the lamp.

To maintain a substantially constant load power of the lamp, it is necessary to regulate the luminance and color temperature of the lamp in accordance with the above requirements. The load power ($P_1$) is given below as:

$P_1$ (load power)=EI (input voltage supplied to the filament in the lamp)×II (filament current).

It is known from DE—3045631 to regulate the luminance and colour temperature of a lamp by detecting and controlling the input voltage supplied to the circuit containing the lamp. The lamp is connected to a source of alternating current and a power controller is connected between the source and the lamp for maintaining the power load supplied to the lamp at a predetermined constant value. The effective voltage across the lamp is squared by a field effect transistor to produce an output voltage which varies in proportion to the power through the lamp. The controller connected between the lamp and source is automatically varied in such a manner that the output voltage and, therefore, the power through the lamp are regulated to a desired value.

According to the present invention, a noise erasing apparatus for use with a stimulable phosphor sheet comprises a source of alternating current; a lamp for emitting noise erasing light at a predetermined constant value of luminance and colour temperature; said lamp being connected to the source by way of a power line and a power controller means; characterised in the provision of current detector means connected to the line for detecting current flowing through the lamp and for calculating an effective value of said current; and comparator means for generating a control signal for said controller based on a comparison of said effective value of current and a predetermined constant value so that the power supplied to the lamp by the controller causes noise erasing light at the predetermined value of luminance and colour temperature to be emitted.

In order that the invention may be more readily understood, it will now be described, by way of example only, with reference to the accompanying drawings, in which:—

Figure 1 is a diagrammatic view of an X-ray diagnostic system using stimulable phosphor sheets and having an erasing apparatus according to the invention; and

Figure 2 is a simplified schematic diagram, largely in block form, of the erasing apparatus according to the invention using the improved power supply.

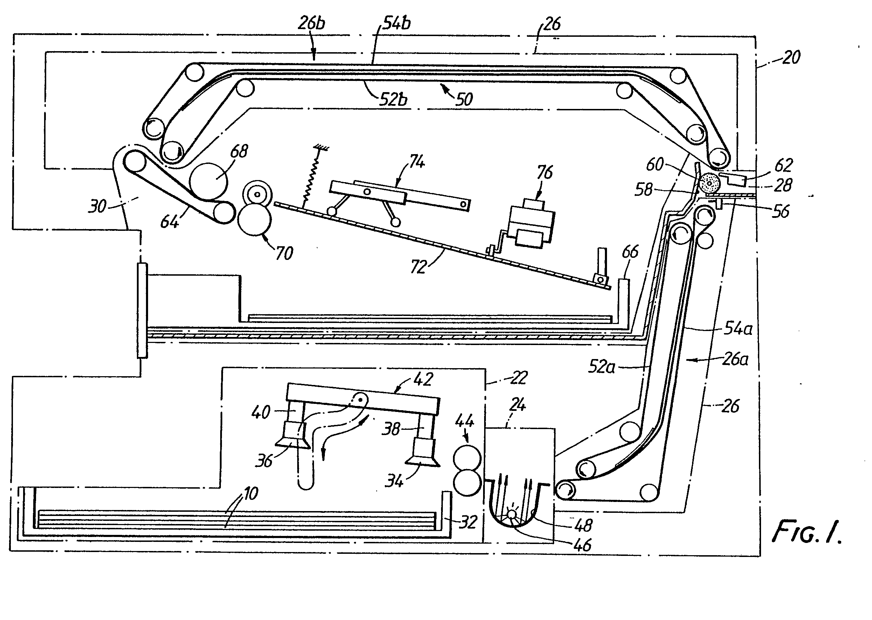

Referring now to the drawings, and particularly to Figure 1, an X-ray diagnostic system 20 is shown having a taking-up and feeding device 22 for unexposed stimulable phosphor sheets 10, a noise erasing apparatus 24, a transport system 26, a light-tight portion 28, and a receiving device 30 for exposed stimulable phosphor sheets 10 transported by the transport system 26.

The taking-up and feeding device 22 comprises a supply magazine 32 to be removed from the taking-up and feeding device 22, to enable convenient loading of unexposed stimulable phosphor sheets 10, (hereinafter referred to as IP), in a darkroom, a taking-up mechanism 42 including take-up pads 34, 36 for taking up the IPs one by one from the supply magazine 32 by suction generated by vacuum pumps 38, 40, and carrying rollers 44 for forwarding an unexposed IP 10 to the transport channel of the transport system 26. The IPs are lifted up one at a time by the take-up pads 34, 36 which act on the opposite side of the IP to the fluorescent layer.

The noise erasing apparatus 24 comprises a lamp 46, for example, a tungsten-filament, fluorescent, sodium, xenon, or iodine lamp, and a reflector 48, disposed as shown in Figure 1, so that each IP 10 is exposed uniformly to the light from the lamp 46. The noise erasing apparatus 24 is synchronised with the movement of the IP 10 so that it emits light when the forward end of the take-up IP 10 reaches the carrying rollers 44. The IP 10 is exposed to the light when it is passed over the noise erasing apparatus 24 at a predetermined speed by the carrying rollers 44.

A transport system 26 is provided in the X-ray diagnostic 20. During an operating cycle, the transport system 26 concurrently transports an unexposed IP 10 from the supply magazine 32 to a pre-exposure station 50, in part defined by the X-ray tube, and an exposed IP 10 from the pre-exposure station 50 to the receiving device 30. The transport system 26 has two continuous band portions 26a, 26b. One portion 26a is occupied in transporting the IP 10 from the carrying roller 44 to the light-tight portion 28, the other 26b is occupied in transporting the IP 10 from the light-tight portion 28 through the pre-exposure station 50 to the receiving device 30. Each portion 26a, 26b includes a pair of continuous band loops 52a, 54a and 52b, 54b, which run around roller wheels in a path. The IP 10 is transported in the transport channel defined by these band loops 52a, 54a and 52b, 54b while being held between the two facing bands loops 52a, 54a or 52b, 54b. The IP 10 is transported by the transport system 26 and stopped at the position where the IP contacts the position detector 56 disposed in the forward end thereof. The IP 10 stays at this staying position during a predetermined period without being transported to the second portion 26b of the transport system 26.

In the light-tight portion 28, there are a guide plate 58 for the IP 10, a light-sealed roller 60 for forwarding the IP with the guide plate 58, and a defect detector 62 for detecting a defect on the surface of IP 10 by suitable means. These components are arranged to prevent light from entering into the darkroom.

The second portion 26b of the transport system 26 includes a top 54b and a bottom 52b band loop which can be moved in the direction perpendicular to the path of the band loops, and into the exposure position where the X-ray beam from the source (not shown) passes through a patient positioned adjacent thereto. Movement of the IP 10 into the exposure position is carried out after the IP 10 is advanced in the precise position on the band loops 52b, 54b, for example, central portion of the second transport portion 26b. If the defective IP 10 is found by the defect detector 62, it will be transported directly to the receiving device 30 without being moved into the exposure position.

The receiving device 30 comprises a timing belt 64 riding on the timing belt pulleys for depositing the exposed IP 10 in the receiving magazine 66 by gripping it in combination with a drive roll 68, a pair of ejector rolls 70 are provided for feeding the exposed IP 10 into the receiving magazine 66. This magazine is mounted on tracks (not shown) to facilitate its removal to a darkroom for loading and unloading. A spring-biased press pad 72 is arranged downstream of the ejector rolls 70 in the feeding path. This press pad 72 is pivotable about an axis and springs urge the pad perpendicularly to the direction of movement of the IP. The pad is flapped by suitable driving mechanism 74 to load the exposed IPs uniformly in the receiving magazine 66. A bar-code reader 76 is provided for reading the identification of the IP 10 and providing electrical signals corresponding to it. The magazine 66 is in a light-tight enclosure.

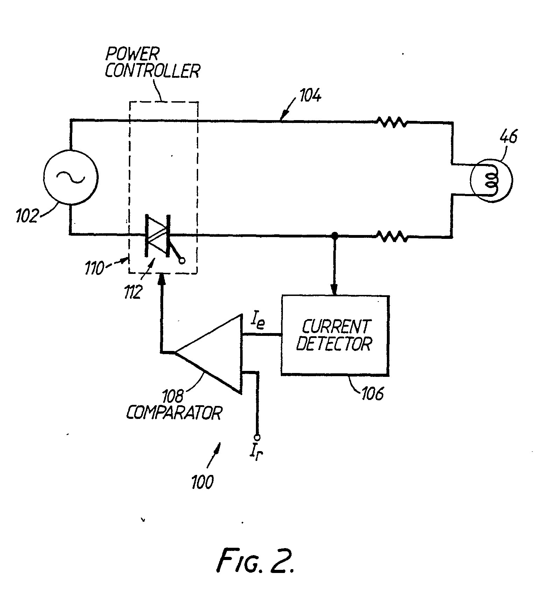

Referring now to Figure 2, the lamp 46 is connected to the AC power source 102 through a power line 104. A current detector means 106 is connected to the power line 104 and it detects the lamp current i(t). The detector calculates the effective value $I_e$ of the current i(t). The detector output is connected to one of the input terminals of a comparator 108 which is also provided with a reference value $I_r$ on its other input terminal. A power controller 110 is connected to the output terminal of the comparator 108 and it controls the current i(t) passing through the power line 104, in accordance with the output of the comparator 108, so that the AC power supply to the lamp 46 from the source 102 is maintained at a constant value.

The effective value $I_e$ may be calculated in the current detector 106 from the detected current i(t) as

$$I_e = \sqrt{\frac{1}{T} \int_0^T i^2(t)dt} \qquad (1)$$

where T is the period of the alternating current.

The difference $I_d$ between the reference $I_r$ and the effective value $I_e$ of the detected current i(t) is supplied to the power controller 110. The reference value $I_r$ is determined relative to the constant value of the load power in the lamp to be maintained.

As shown in Figure 2, the power controller 110 is the phased controlled type suitable to be interposed between the AC power source 102 and the lamp 49 and comprises a triac 112 connected to the power line 104. A bias circuit (not shown) provides a rectified sample which is applied to the gate of triac 112. Upon the result of the comparator, triac 112 will conduct, varying the interval of the rectified sample signal for phase controlling the current i(t) through the power line 104. Thereby, it can be performed to maintain the load power of the lamp 46 at constant value during a controlling period within very close limits.

As described previously, an alternating current power source is used in the erasing apparatus as a power source.

Generally, the lamp has a resistance which varies with the variation of the filament temperature. Hence, the resistance $R_l$ has a great effect on the lamp current $I_e$, and, if we assume that the variation of the lamp resistance $R_l$, in accordance with the variation of the filament temperature can be ignored during the operation within the regulated power supplies, a load power $P_1$ in the lamp 46 is represented by the following equation:

$$P_l = E_l \times I_l = (I_l \times R_l) \times I_l$$
$$= I_l^2 \times R_l \qquad (2)$$

where $E_l$ is the lamp voltage.

As understood from the above equation (2), it is possible to keep the lamp power $P_1$ constant by controlling the lamp current $I_l$, thereby to maintain the luminance and color temperature of the lamp 46 at a constant value satisfying the requirements for the erasing apparatus.

In addition, if we assume that the heating effect of the direct current is equal to that of the alternating current, the following equation is determined from (1) and (2):

$$\int_0^T R_l i^2(t)dt = R_l \cdot I_l^2 \cdot T \qquad (3)$$

where T is the period of the alternating current.

The equation (3) indicated that keeping the lamp current $I_l$ constant corresponds to regulating the effective value of the alternating current

$$I_e \left(= \sqrt{\frac{1}{T} \int_0^T i^2(t)dt}\right).$$

In the power controller 110, the operation for maintaining the load power at constant value is performed by using the effective value $I_e$, operationally $I_e^2$, where

$$I_e^2 = \frac{1}{T} \int_0^T i^2(t)dt \qquad (4)$$

Therefore, the load power in the lamp 46 is kept at a constant value despite changes in the source voltage.

Although the invention has been described in its preferred form with a certain degree of particularity, it is understood that the present disclosure has been made only by way of example. For example, the embodiment utilises the power controller of the phased controlled type, however, it is possible to utilise suitable current control means by varying the voltage. Further, it is not limited to the use of a triac in the power controller 110 of the phased controlled type, and can be thought to use other equivalent components instead of a triac.

**Claims**

1. A noise erasing apparatus for use with a stimulable phosphor sheet comprising a source of alternating current (102); a lamp (46) for emitting noise erasing light at a predetermined constant value of luminance and color temperature; said lamp being connected to the source by way of a power line (104) and a power controller means (110); characterised by the provision of current detector means (106) connected to the line for detecting current flowing through the lamp and for calculating an effective value of said current; and comparator means (108) for generating a control signal for said controller based on a comparison of said effective value of current and a predetermined constant value so that the power supplied to the lamp by the controller causes noise erasing light at the predetermined value of luminance and colour temperature to be emitted.

2. Apparatus according to claim 1, characterised in that said power controller means is of the phased controlled type so as to control the current passing through the line.

3. Apparatus according to claim 2, characterised in that said power controller means comprises a triac for varying the period of the rectified sample being supplied to the gate thereof.

4. Apparatus according to claim 1, characterised in that said irradiation means is an illuminant (46) positioned downstream in a transport means for transporting said stimulable phosphor sheet (10) behind a supply magazine for stacking a plurality of stimulable phosphor sheets therein.

## Patentansprüche

1. Störungslöscheinrichtung zur Verwendung bei einem stimulierbaren Phosphorbogen, mit einer Quelle für Wechselstrom (102); einer Lampe (46) zur Ausstrahlung von Störungen löschendem Licht mit einem vorbestimmten konstanten Luminanzwert und einer vorbestimmten Farbtemperatur; wobei die Lampe mit der Quelle über eine Versorgungsleitung (104) und eine Leistungssteuereinrichtung (110) verbunden ist, gekennzeichnet durch eine Stromdetektoreinrichtung (106), die an die Leitung angeschlossen ist und Strom feststellt, der durch die Lampe fließt, und einen Effektivwert des Stromes berechnet, eine Vergleichseinrichtung (108) zur Erzeugung eines Steuersignals für die Steuereinrichtung auf der Grundlage eines Vergleichs zwischen dem genannten Effektivwert des Stromes und einem vorbestimmten konstanten Wert, so daß die der Lampe durch die Steuereinrichtung zugeführte Leistung die Ausstrahlung von Störungen löschendem Licht bei dem vorbestimmten Luminanzwert und der vorbestimmten Farbtemperatur bewirkt.

2. Störungslöscheinrichtung nach Anspruch 1, dadurch gekennzeichnet, daß die Leistungssteuereinrichtung vom Phasensteuerungstyp ist, um so den durch die Leitung fließenden Strom zu steuern.

3. Störungslöscheinrichtung nach Anspruch 2, dadurch gekennzeichnet, daß die Leistungssteuerungseinrichtung einen Triac zur Änderung der Periode der gleichgerichteten Probe ist, die dessen Gatter zugeführt ist.

4. Störungslöscheinrichtung nach Anspruch 1, dadurch gekennzeichnet, daß die Bestrahlungsmittel eine Beleuchtungsquelle (46) sind, die in einer Transporteinrichtung zum Transport des stimulierbaren Phosphorbogens (10) in Förderrichtung hinter einem Speisemagazin zum Stapeln einer Anzahl von stimulierbaren Phosphorbögen darin angeordnet ist.

## Revendications

1. Appareil d'effacement de bruits destiné à être utilisé avec des feuilles de phosphore stimulables qui comprend une source de courant alternatif (102); une lampe (46) qui émet une lumière effaçant. les bruits ayant une luminance et une température de couleurs prédéterminées; ladite lampe étant connectée à la source au moyen d'une ligne d'alimentation (104) et d'un régulateur de puissance (110), caractérisé en ce qu'il comprend un détecteur de courant (106) connecté à ladite ligne afin de mesurer le courant circulant dans la lampe et pour calculer la valeur effective de ce courant; et un comparateur (108) pour générer un signal de commande pour ledit régulateur basé sur une comparaison entre ladite valeur effective du courant et une valeur constante prédéterminée de sorte que la puissance électrique fournie à la lampe par le régulateur fait que celle-ci produit une lumière d'effacement de bruits ayant les valeurs prédéterminées de luminance et de température de couleur.

2. Appareil selon la revendication 1, caractérisé en ce que ledit régulateur de puissance est du type à commande de phase et règle le courant circulant dans la ligne.

3. Appareil selon la revendication 2, caractérisé en ce que le régulateur de puissance comprend un triac pour faire varier la période de l'échantillon redressé fourni à sa gâchette.

4. Appareil selon la revendication 1, caractérisé en ce que la lampe (46) est située en aval d'un dispositif de transport qui transporte le feuille de phosphore stimulable (10) vers un magasin d'alimentation afin d'y empiler un certain nombre de feuilles de phosphore stimulables.

Fig.1.

Fig. 2.